Europäisches Patentamt

European Patent Office

Office européen des brevets

(19)

(11) Numéro de publication: **0 193 482**
**A1**

(12) **DEMANDE DE BREVET EUROPEEN**

(21) Numéro de dépôt: 86440016.3

(22) Date de dépôt: 20.02.86

(51) Int. Cl.⁴: **F 24 D 19/10**
**F 24 D 3/00**

(30) Priorité: 28.02.85 FR 8503097

(43) Date de publication de la demande:
03.09.86 Bulletin 86/36

(84) Etats contractants désignés:
AT BE CH DE GB IT LI LU NL SE

(71) Demandeur: ZAEGEL-HELD Fabrique d'Appareils de chauffage, de cuisson et de conditionnement, Société Anonyme dite
35, rue du Général Leclerc
F-67210 Obernai(FR)

(72) Inventeur: Nonclercq, Jean-Claude
10, rue des Hauts Pâturages
F-67210 Obernai(FR)

(72) Inventeur: Cromer, Paul
21, Route Romaine
F-67140 Stotzheim(FR)

(74) Mandataire: Aubertin, François
Cabinet Lepage & Aubertin Innovations et Prestations 4, rue de Haguenau
F-67000 Strasbourg(FR)

(54) Centrale de commande, notamment pour une chaudière bi-énergie ou tout autre mode de chauffage central à combustible stockable possédant plusieurs modes de fonctionnement.

(57) Une chaudière bi-énergie comportant entre-autres, une chaudière électrique (2), une chaudière d'appoint (7), un ballon de chauffage d'eau chaude sanitaire (3), un circuit hydraulique (4) pourvu de circulateurs (8, 9, 10), est régulée par une centrale de commande (1) qui permet la mise en route ou l'arrêt des éléments (2, 3, 7, 8, 9, 10) précités, ceci dans un ordre quelconque, et selon un cycle déterminé en fonction du mode de fonctionnement de la chaudière. La centrale de commande (1) comporte des moyens automatiques (12, ... 20) et/ou manuels (22, 23, 24) de sélection du mode de fonctionnement de la chaudière et des moyens de commande électromécaniques (28, ... 36) de la chaudière électrique (2), de la chaudière d'appoint (7) et des circulateurs (8, 9, 10), ces éléments (2, 7, 8, 9, 10) étant mis en route ou arrêtés par les moyens de séquencement automatiques (51).

EP 0 193 482 A1

./...

FIG. 2

0193482

Centrale de commande, notamment pour une chaudière bi-énergie ou tout autre mode de chauffage central à combustible stockable possédant plusieurs modes de fonctionnement.

L'invention concerne une centrale de commande, notamment pour une chaudière bi-énergie ou tout autre mode de chauffage central à combustible stockable possédant plusieurs modes de fonctionnement, et comportant entre-autres, une chaudière électrique, une chaudière d'appoint, un ballon de chauffage d'eau chaude sanitaire, ainsi qu'un circuit hydraulique pourvu de circulateurs.

Dans le cas général, les chaudières bi-énergie sont composées principalement d'une chaudière électrique et, par exemple, d'un moyen de chauffage d'appoint tel qu'une chaudière à fuel devant être mise en route, soit en cas d'insuffisance du chauffage électrique, soit dans le cas où le tarif de l'électricité est relevé pendant les périodes de forte demande, ce qui conduit l'utilisateur à se tourner vers des sources d'énergie plus économiques pendant ces périodes de pointe.

Fréquemment, la chaudière est reliée à une centrale de commande chargée de mettre en route et d'arrêter les divers organes de chauffage, en fonction des conditions climatiques, d'une part, et des considérations tarifaires précitées, d'autre part.

Une telle centrale de commande se compose fréquemment d'une chaîne d'acquisition de température, qui peut comporter un thermostat d'ambiance pour la régulation de la chaudière en fonction de la température des locaux, ou une sonde extérieure, pour la régulation de la chaudière en fonction du climat extérieur. La température enregistrée est à chaque instant transmise à un régulateur qui, selon la variation de cette température dans le temps, délivre deux sorties en tout ou rien à un dispositif de commande électromécanique pour la mise en route ou l'arrêt de la chaudière électrique et/ou de la chaudière à fuel.

Ainsi, l'une des sorties tout ou rien délivrée par le régulateur correspond à une "demande de chaud", l'autre correspondant à une "demande de froid".

Dans l'état actuel de la technique, le dispositif de commande électromécanique utilisé est fréquemment constitué par un programmateur à cames, composé d'un ensemble de cames empilées sur un axe et solidaires en rotation de celui-ci, cet axe étant lui-même mû par un moteur électrique.

Dans le cadre d'une "demande de chaud", envoyée par le régulateur, la rotation de ce programmateur à cames provoque de façon connue, la fermeture en cascade et selon une séquence déterminée, de contacts électriques pour la mise en service des éléments du circuit électrique et du circuit hydraulique (résistances chauffantes, circulateurs, pompe) de la chaudière.

L'arrêt du programmateur à cames se produit en fin de course sur la dernière came, tous les organes de chauffage ayant été mis en service. En cas de passage au tarif "heures pleines", les phases de la chaudière électrique sont coupées simultanément, par des relais, sans extinction progressive.

Dans une autre réalisation également connue dans l'état actuel de la technique, le régulateur fournit ses "demandes de froid ou de chaud" à un ensemble de relais temporisés disposés en série, chaque relais mettant en route la temporisation du suivant, ce qui conduit effectivement à la mise en route selon une séquence donnée, de circuits de puissance de la chaudière.

Cependant, ces dispositifs connus de commande de chaudières bi-énergie comportent de multiples inconvénients.

En effet, au cours de leur fonctionnement, les dispositifs de commande classiques parcourent un cycle de commande complet après chaque "demande de chaud" provenant du régulateur.

Ainsi, une demande de chaud se traduit par un enclenchement en cascade de toute la puissance disponible, jusqu'à ce qu'apparaisse un nouveau déséquilibre thermique. Celui-ci se solde par une "demande de froid", qui entraîne un déclenchement simultané de l'ensemble de la puissance utilisée. Par ailleurs, lors du changement de tarif, les résistances chauffantes du circuit électrique de puissance sont également brutalement débranchées, ce qui nuit à la stabilité du réseau distributeur d'énergie électrique. Dans le cas d'une commande par programmateur à cames, un tel fonctionnement se traduit par une succession de rotations dans un sens correspondant à des enclenchements consécutifs à une "demande de chaud", entrecoupées par des arrêts plus ou moins longs correspondant à une "demande de froid". L'axe du programmateur effectuant un tour en quatre ou cinq minutes environ, il en résulte un temps de réponse relativement long par rapport aux besoins de chaleur, d'où une sensation d'inconfort.

Par ailleurs, dans les dispositifs de commande classiques, il n'y a pas toujours de séparation entre les circuits de puissance et le circuit de commande, qui, de ce fait, fonctionne sous la tension nominale de l'installation et ne peut être testé séparément.

Enfin, le programmateur à cames classique comporte un empilement de sept cames, ce qui suppose un dimensionnement relativement important du programmateur, d'une part, et du moteur d'entraînement, d'autre part.

La présente invention a pour but de remédier à ces inconvénients. L'invention telle qu'elle est caractérisée dans les revendications, résout le problème consistant à créer une centrale de commande pour chaudières bi-énergie permettant l'introduction d'un plus grand nombre de phases et de possibilités de fonctionnement, du fait que la commande des circuits de puissance est assurée selon un cycle déterminé, par des moyens de séquencement automatique à faible temps de réponse.

Les avantages obtenus grâce à cette invention consistent essentiellement en ceci que, grâce au décalage angulaire des interrupteurs à lames souples utilisés tel que décrit, les enclenchements et les déclenchements des organes de puissance se font progressivement dans le temps. De plus, tous ces interrupteurs à lames souples étant disposés sous un même ensemble de disques hémicirculaires, le nombre d'organes de puissance à commander peut facilement être augmenté par adjonction d'interrupteurs à lames souples supplémentaires, sans augmenter les dimensions de la centrale de commande.

Par ailleurs, du fait qu'elle possède un retour à zéro automatique après une coupure ou un retour progressif à zéro lors du changement de période tarifaire, cette centrale de commande permet de réenclencher progressivement la puissance. De plus, cette centrale de commande assure la séparation des circuits de commande et des circuits de puissance. En outre, dans le cas d'une régulation par rapport au climat extérieur, la centrale de commande procure une régulation du type modulant, c'est-à-dire qu'elle ajuste rapidement la puissance des organes de chauffage enclenchés à la puissance nécessaire au chauffage.

L'invention est exposée ci-après plus en détail à l'aide de dessins représentant seulement un mode d'exécution.

La figure 1 représente en vue schématique l'ensemble d'une chaudière bi-énergie intégrant une centrale de commande conforme à l'invention.

La figure 2 représente en vue schématique la partie électrique d'une centrale de commande conforme à l'invention.

La figure 3 représente en vue de dessus le programmateur de la centrale de commande conforme à l'invention.

La figure 4 représente en vue selon une coupe I-I le programmateur de la centrale de commande conforme à l'invention.

La figure 5 représente en vue selon une coupe partielle II-II le programmateur de la centrale de commande conforme à l'invention.

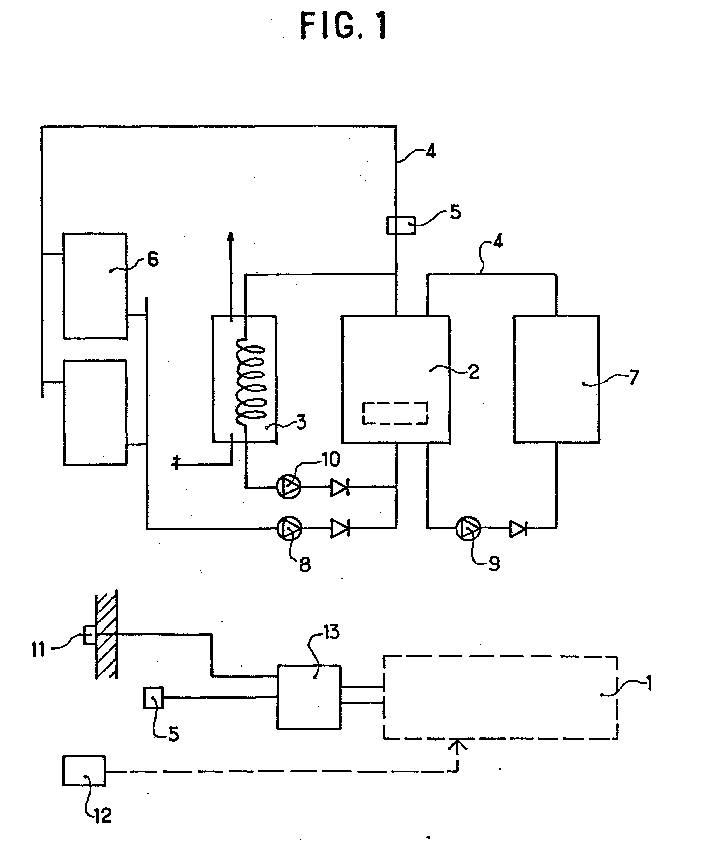

On se réfère à la figure 1.

La centrale de commande 1 conforme à l'invention permet de commander les mises en route et les arrêts successifs des différents éléments d'une chaudière bi-énergie utilisant par exemple l'électricité et un autre combustible. Dans le cas de la figure 1, non limitatif, la chaudière bi-
énergie comporte principalement une chaudière électrique 2 et un ballon d'eau chaude sanitaire 3, alimentés en énergie par le réseau électrique, ainsi qu'une chaudière d'appoint 7 qui peut être par exemple
une chaudière au fuel.

La chaudière électrique 2 et la chaudière d'appoint 7 permettent de
chauffer l'eau d'un circuit hydraulique 4, dont la température de sortie de chaudière est mesurée par une sonde de départ d'eau 5 et comprenant des radiateurs 6. Le circuit hydraulique 4 comporte un certain
nombre de circulateurs, notamment un circulateur de chauffage 8, un
circulateur secondaire 9 et un circulateur sanitaire 10, destinés à assurer le débit d'eau entre les sources de chaleur, les radiateurs 6 et
le ballon d'eau chaude sanitaire 3.

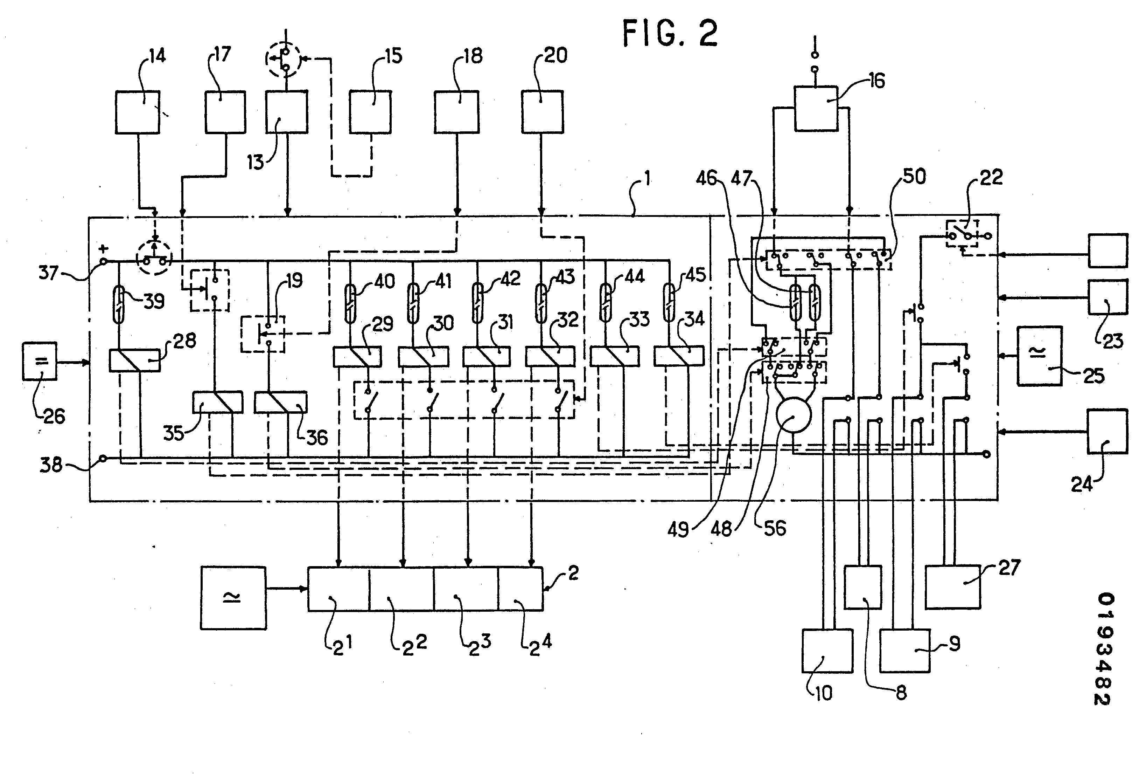

Par ailleurs, des capteurs de température tels qu'une sonde extérieure
11 et la sonde de départ d'eau 5 délivrent leurs informations à un régulateur 13 connu en soi et délivrant des demandes de chaud ou de
froid à la centrale de commande 1. Celle-ci peut aussi recevoir des informations de température de la part d'un thermostat d'ambiance 12.
Elle comporte un certain nombre de relais (voir figure 2), alimentés
en basse tension et destinés à commander l'enclenchement des différentes phases $2_1$, $2_2$, $2_3$, $2_4$ de la chaudière électrique 2, ainsi que la
mise en route de la chaudière d'appoint 7 et des circulateurs associés
8, 9, 10.

On se réfère à la figure 2.

La centrale de commande 1 conforme à l'invention possède un certain
nombre d''entrées électriques fonctionnant en tout ou rien et connectées
à des capteurs d'informations disposés en divers endroits de la chaudière. Ces capteurs d'informations sont, en fait, des moyens de sélection automatiques de l'un des modes de fonctionnement possibles pour
la chaudière.

Ainsi, la centrale de commande 1 est connectée en entrée à un limiteur
de température 14 à réarmement manuel, mais à déclenchement automatique en cas de surchauffe, et à un limiteur de température 15 à déclenchement et à réarmement automatiques. Par ailleurs, la centrale de commande 1 reçoit des entrées provenant, d'une part, d'un aquastat 16 situé sur la chaudière électrique 2 et, d'autre part, d'un aquastat 17 situé au niveau du ballon d'eau chaude sanitaire 3. Ces aquastats 16 et 17, réglés pour une certaine température, positionnent automatiquement la centrale de commande 1 dans un mode de fonctionnement déterminé, par l'ouverture ou la fermeture automatique d'un contact lorsque la température d'eau préréglée est atteinte.

De plus, la centrale de commande 1 reçoit automatiquement une information concernant le tarif de l'électricité en vigueur à un instant donné, à savoir le tarif "heures creuses" ou le tarif "heures pleines", cette information étant automatiquement fournie par le réseau électrique au moyen d'une entrée "tarif" 18 actionnant un contact 19 situé sur la centrale de commande 1.

Enfin, la centrale de commande 1 reçoit par l'intermédiaire d'une entrée de délestage 20, une commande automatique de délestage d'une ou de plusieurs des phases $2_1$... $2_4$ de la chaudière électrique 2 par l'intermédiaire de sectionneurs $21_1$... $21_4$.

Par ailleurs, la centrale de commande 1 comporte des moyens manuels de sélection d'un mode de fonctionnement de la chaudière, constitués par un interrupteur "marche-arrêt" 22, d'un inverseur "automatique-manuel" 23 permettant de positionner la chaudière en mode automatique ou en mode manuel, et d'un inverseur "été-hiver" 24 permettant encore de sélectionner manuellement deux autres modes de fonctionnement de la chaudière.

Bien entendu, les entrées précitées de sélection manuelle et automatique d'un mode de fonctionnement ne sont nullement limitatives et dépendent de la complexité de la chaudière et de la souplesse d'utilisation désirée.

La centrale de commande 1 comporte, en outre, deux entrées d'alimentation dont l'une 25 est connectée à l'alimentation en 220 volts du secteur, et dont l'autre est connectée à l'alimentation continue basse tension 26, qui peut d'ailleurs être fournie par redressement à partir de l'alimentation 25.

Bien entendu, la centrale de commande 1 étant destinée à commander l'enclenchement et/ou le déclenchement des organes de puissance que sont la chaudière électrique 2, les circulateurs 8, 9, 10 et le brûleur 27 de la chaudière d'appoint 7, il est nécessaire qu'elle comporte des moyens de commande électromécaniques des organes de puissance précités, et ceci selon un cycle correspondant aux modes de fonctionnement sélectionnés.

A cet effet, la centrale de commande 1 comporte un certain nombre de relais 28, 29, ... 36 alimentés en basse tension par l'intermédiaire de la borne positive 37 et de la borne de masse 38 connectées à l'alimentation continue basse tension 26.

Dans une réalisation particulière de la présente invention, les relais 29, ... 34 sont alimentés dès la fermeture des interrupteurs 40... 45 placés entre la borne positive 37 de l'alimentation continue basse tension 26 et lesdits relais 29, ... 34.

Ainsi, chacun des relais 29 ... 34 commande respectivement, dès lors qu'il est alimenté, les phases $2_1$, $2_2$, $2_3$, $2_4$ de la chaudière électrique 2, le circulateur secondaire 9 et le brûleur 27.

De même, le relais 35 commande le circulateur sanitaire 10 alors que le relais 28 commande le circulateur de chauffage 8. Par ailleurs, la centrale de commande 1 comporte, dans un mode de réalisation particulière, un relais 28 pour la remise à zéro du cycle de fonctionnement, un relais 35 pour la commutation du circuit d'eau chaude sanitaire permettant d'obtenir de l'eau chaude sanitaire prioritairement au chauffage, et un relais 36 pour l'inversion du défilement des étapes de fonctionnement de la chaudière. La centrale de commande 1 comporte en outre des interrupteurs 46, 47 connectés à des commutateurs multipolaires 48, 49, 50 commandés respectivement par les relais 36, 28 et 35.

Cependant, la centrale de commande 1 ne pourrait fonctionner si elle n'était pourvue, en outre, de moyens de séquencement automatiques 51 destinés à assurer la succession dans le temps des enclenchements et des déclenchements des organes de puissance, et ceci en fonction du mode de fonctionnement de la chaudière, sélectionné automatiquement et/ou manuellement comme décrit précédemment.

A cet effet, la centrale de commande 1 conforme à l'invention comporte des moyens de séquencement automatiques 51 permettant d'activer dans un ordre déterminé les relais 28, ... 36.

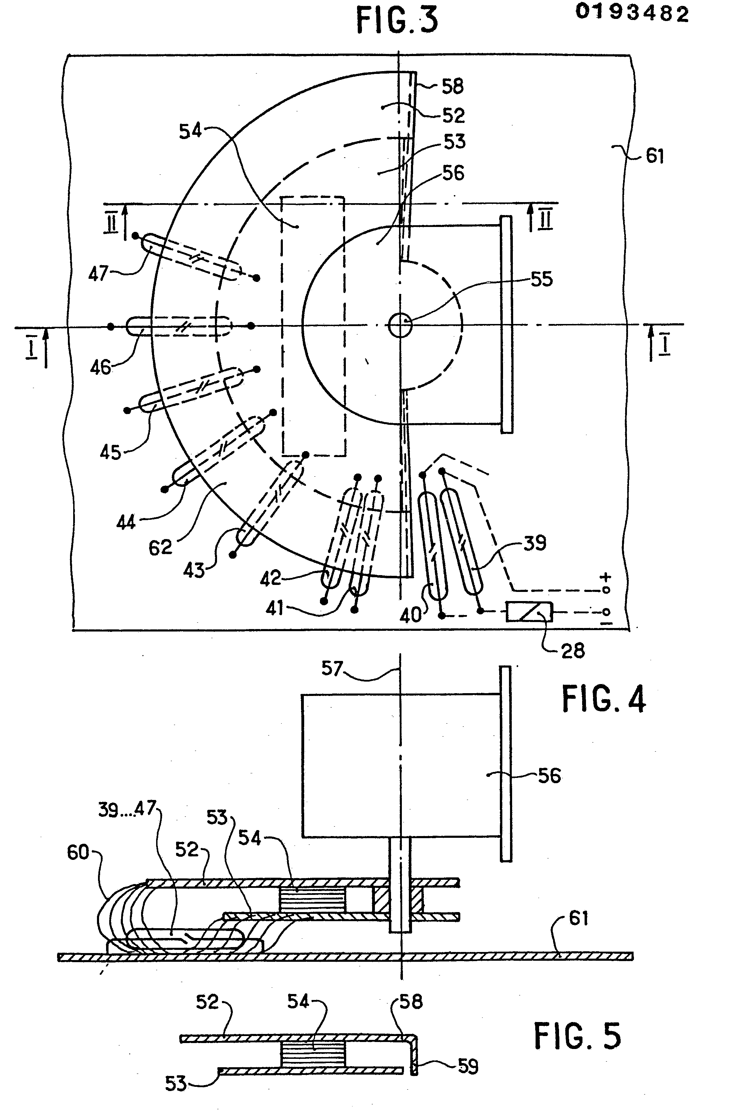

On se réfère aux figures 3, 4 et 5.

Dans un mode de réalisation particulièrement avantageux de la présente invention, lesdits moyens de séquencement automatiques sont constitués par deux disques hémicirculaires supérieur 52 et inférieur 53 reliés par un aimant 54 et mûs en rotation autour d'un axe 55 par des moyens moteurs 56, lesdits disques hémicirculaires supérieur 52 et inférieur 53 coopérant avec des interrupteurs magnétiques (39 ... 47).

A cet effet, les disques hémicirculaires supérieur 52 et inférieur 53 permettent de canaliser le flux magnétique produit par l'aimant 54. Celui-ci possède son axe nord-sud orienté parallèlement à l'axe de rotation 57 des disques supérieur 52 et inférieur 53.

Le disque supérieur 52 possède le long de son chant 58 un rabat 59 dirigé vers le disque inférieur 53 de façon à fermer le circuit magnétique ainsi formé, par des lignes de champ 60.

De plus, les interrupteurs magnétiques 39 ... 47 sont disposés sur un support, par exemple un circuit imprimé 61 fixe et situé en-dessous des disques 52, 53, mobiles en rotation autour de l'axe de rotation 57.

Dans un mode de réalisation particulièrement avantageux, les interrupteurs magnétiques 39 ... 47 sont constitués par les interrupteurs à lames souples 39 ... 47 (figure 3) disposés sur le circuit imprimé 61, concentriquement par rapport à l'axe de rotation 57, et séparés deux à deux par des secteurs angulaires 62.

Par ailleurs, chacun des interrupteurs à lames souples 39 ... 47 se trouve placé dans le circuit de commande d'un des relais 28, ... 36 tel que représenté à la figure 2.

Ainsi, lors du fonctionnement de la centrale de commande 1 conforme à l'invention, les disques 52, 53 solidaires de l'aimant 54 tournent autour de l'axe de rotation 57, dans un sens déterminé par le mode de fonctionnement sélectionné automatiquement comme décrit précédemment. De ce fait, les disques 52, 53 entraînés par les moyens moteurs 56 viennent à recouvrir les interrupteurs à lames souples 39 ... 47 les uns après les autres et les soumettent au champ magnétique de l'aimant 54.

Par conséquent, les interrupteurs à lames souples se ferment successivement, et ceci à des instants séparés par un temps fonction à la fois de l'écartement angulaire entre deux interrupteurs à lames souples successifs et de la vitesse de rotation des moyens moteurs 56. Ces derniers sont constitués par exemple d'un moteur synchrone à faible vitesse de rotation (un tour en vingt minutes). De même, lorsque les disques 52, 53 découvrent à nouveau un interrupteur à lame souple 39 ... 47, celui-ci s'ouvre et le relais correspondant est désactivé. Bien entendu, le mouvement relatif existant entre les interrupteurs à lames souples successifs 39 ... 47 et l'aimant 54 peut également être obtenu par des interrupteurs disposés parallèlement sur une réglette se déplaçant en ligne droite sous un aimant.

Ainsi, la fermeture successive des interrupteurs à lames souples 39... 47 conduit au séquencement du fonctionnement des relais 28 ... 36 et, par suite, au séquencement automatique du fonctionnement des organes de puissance (chaudière électrique 2, chaudière d'appoint 7, circulateurs 8, 9, 10...) de la chaudière.

En outre, lors du fonctionnement de la chaudière électrique, toute variation de la demande de chaud est immédiatement suivie par la rotation des disques 52, 53 dans un sens ou dans l'autre, ce qui provoque le déclenchement ou l'enclenchement d'une phase supplémentaire, sans que les disques 52, 53 aient besoin d'effectuer un tour complet. De même, l'enclenchement ou le déclenchement du brûleur 27 de la chaudière d'appoint 7 est effectué rapidement en fonction de la demande d'énergie, ce qui peut signifier que la centrale de commande 1 procure une régulation du type modulant, puisqu'elle ajuste rapidement la puissance des organes de chauffage enclenchés, à la puissance nécessaire au chauffage.

Revendications

1. Centrale de commande, notamment pour une chaudière bi-énergie ou tout autre mode de chauffage central à combustible stockable, possédant plusieurs modes de fonctionnement et comportant entre-autres une chaudière électrique (2), une chaudière d'appoint (7), un ballon d'eau chaude sanitaire (3) ainsi qu'un circuit hydraulique (4) pourvu de circulateurs (8, 9, 10), centrale de commande caractérisée par le fait qu'elle comporte, d'une part, des moyens automatiques (12,... 20) et/ou manuels (22, 23, 24) de sélection du mode de fonctionnement de la chaudière et, d'autre part, des moyens de commande électromécaniques (28, ... 36) de la chaudière électrique (2), de la chaudière d'appoint (7) et des circulateurs (8, 9, 10) dont la mise en route et/ou l'arrêt sont assurés dans un ordre quelconque, selon un cycle déterminé, par des moyens de séquencement automatiques (51), en fonction dudit mode de fonctionnement de la chaudière.

2. Centrale de commande selon la revendication 1, dans laquelle lesdits moyens automatiques (12 ... 20) de sélection du mode de fonctionnement de la chaudière sont constitués par des entrées électriques en tout ou rien fournies par un régulateur (13) ou un thermostat d'ambiance (12), des limiteurs de température (14, 15), des aquastats (16, 17), une entrée "tarif" (18) actionnant un contact (19), et une entrée de délestage (20).

3. Centrale de commande selon la revendication 1, dans laquelle lesdits moyens manuels (22, 23, 24) de sélection du mode de fonctionnement de la chaudière sont constitués par un interrupteur "marche-arrêt" (22), un inverseur "automatique-manuel" (23), et un inverseur "été-hiver" (24).

4. Centrale de commande selon la revendication 1, dans laquelle lesdits moyens de commande électromécaniques (28, ... 36) de la chaudière électrique (2), de la chaudière d'appoint (7), et des circulateurs (8, 9, 10) sont constitués par des relais (28, ... 36) assurant la mise en route et/ou l'arrêt de la chaudière électrique (2), de la chaudière d'appoint (7) et des circulateurs (8, 9, 10).

5. Centrale de commande selon la revendication 1, dans laquelle lesdits moyens de séquencement automatiques (51) sont constitués par deux disques hémicirculaires supérieur (52) et inférieur (53) fixés de part et d'autre d'un aimant (54) et mûs en rotation autour d'un axe (55) par des moyens moteurs (56), lesdits disques hémicirculaires supérieur (52) et inférieur (53) coopérant avec des interrupteurs magnétiques (39 ... 47).

6. Centrale de commande selon les revendications 1 et 5, dans laquelle lesdits interrupteurs magnétiques (39 ... 47) sont constitués par des interrupteurs à lames souples (39 ... 47) disposés sur un circuit imprimé (61), concentriquement par rapport à l'axe de rotation (57), de façon à être soit recouverts, soit découverts par les disques hémicirculaires supérieur (52) et inférieur (53).

7. Centrale de commande selon la revendication 5, dans laquelle lesdits moyens moteurs (56) sont constitués par un moteur électrique synchrone.

8. Centrale de commande selon la revendication 5, dans laquelle ledit disque hémicirculaire (52) comporte un rabat (59) dirigé vers le disque hémicirculaire inférieur (53).

9. Centrale de commande selon les revendications 4 et 5, dans laquelle lesdits interrupteurs magnétiques (39, ... 45) sont placés en série respectivement avec les relais (29, ... 34) de commande des circuits de puissance de la chaudière électrique (2), de la chaudière d'appoint (7) et des circulateurs (8, 9, 10).

10. Centrale de commande selon les revendications 4 et 5, dans laquelle lesdits interrupteurs magnétiques (46, 47) sont connectés à des commutateurs multipolaires (48, 49, 50) commandés respectivement par les relais (36, 28, 35) agissant sur les moyens moteurs (56).

11. Centrale de commande selon les revendications 4 et 5, dans laquelle l'interrupteur magnétique (39) est placé en série avec le relais (28) commandant la remise à zéro du cycle de fonctionnement de la chaudière.

0193482

# FIG. 1

# FIG. 2

0193482

FIG.3

0193482

FIG. 4

FIG. 5

# Office européen des brevets

## RAPPORT DE RECHERCHE EUROPEENNE

EP  86 44 0016

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | EP-A-0 108 699 (SOCIETE FINANCIERE ET COMMERCIALE DU CHABLAIS) <br> * Abrégé * | 1 | F 24 D  19/10 <br> F 24 D   3/00 |
| A | FR-A-2 430 705 (FRERE) <br> * En entier * | 1 | |
| A | US-A-2 700 505 (JACKSON) <br> * Colonnes 1-5; figures 1,2 * | 1-4 | |
| A | FR-A-2 038 959 (COMMUNICATIONS PATENTS LTD.) <br> * Revendications 1-3 * | 5,6 | |

| DOMAINES TECHNIQUES RECHERCHES (Int Cl.4) |
|---|
| F 24 D <br> H 01 H |

Le présent rapport de recherche a été établi pour toutes les revendications

| Lieu de la recherche | Date d'achèvement de la recherche | Examinateur |
|---|---|---|
| LA HAYE | 03-06-1986 | VAN GESTEL H.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82